# EUROPEAN PATENT APPLICATION

(11) **EP 3 566 906 A1**
(43) Date of publication of application: **13.11.2019**
(21) Application number: 18211587.3
(22) Date of filing: 11.12.2018
(51) Int. Cl.: B60R 11/02

(54) **VEHICLE-MOUNTED ROLLER AUTOMATIC MOBILE PHONE CLAMPING SUPPORT**

(30) Priority: 08.05.2018 CN 201810434151
(71) Applicant: Shenzhen Lizi Technology Co., Ltd., Shenzhen, Guangdong 518126 (CN)
(72) Inventor: Su, Chunfa, Xuzhou City, Jiangsu Province (CN)
(74) Representative: Cabinet Chaillot

(57) **Abstract**

The invention discloses a novel vehicle-mounted roller automatic mobile phone clamping support, comprising a shell, with a fixing clamp assembly at bottom, a wireless charging assembly and a gear transmission assembly at middle, a clamping device at both ends that comprises an arm cover and a connecting arm support, with a roller silicone ring at opposite surface of the arm cover; a roller shaft at each end of the roller silicone ring, the roller shaft in the roller shaft orifice of the arm cover, the connecting arm support connected with the transmission shaft of the gear transmission assembly, and a hinged structure arranged therebetween. Two rollers are arranged at mobile phone place, the phone can be clamped by pressing hard them, to adjust different sizes of mobile phones and strength; solving the problem of the control of clamping force and clamping strength, wireless charging and reduction of occupying space.

## Description

### FIELD OF THE INVENTION

The invention relates to the field of mobile phone support and in particular, to a novel vehicle-mounted roller automatic mobile phone clamping support.

### DESCRIPTION OF THE RELATED ART

The use of mobile phone supports has become very common, and the types thereof are also increasing; however, when the mobile phone is clamped by the prior mobile phone supports, the clamping jaws thereof may cause friction extrusion on both sides of the mobile phone, thereby damaging the mobile phone. Furthermore, the clamping force cannot be adjusted according to the size of the mobile phone, which is not flexible enough on use.

### SUMMERY OF THE INVENTION

The technical issue to be solved by the invention is to provide a novel vehicle-mounted roller automatic mobile phone support, which can effectively solve the deficiencies in the prior art, and can be applied to mobile phones of various sizes and has a broader application scope.

The invention is achieved by the following technical solution: a novel vehicle-mounted roller automatic mobile phone clamping support, comprising a shell, wherein a fixing clamp assembly is arranged at the bottom thereof; a wireless charging assembly and a gear transmission assembly are arranged at the middle thereof; a clamping device is arranged at both ends thereof respectively; and a clamping cavity for clamping the mobile phone is formed between two clamping devices; the clamping cavity drives the connecting arm support and the connecting portion of the gear through circumscribing the shift lever and pressing the shift lever switch to realize the size adjustment of the clamping cavity; a hidden spring is arranged inside the shift lever, when the shift lever switch is pressed, the gear on the shift lever is disengaged to move left and right to drive the gear connecting arm support to stretch; when the pressed shift lever is released, the hidden spring is open outward to be up against the shift lever to make the gear on the shift lever and the gear on the shell butted and to limit the connecting arm support to stretch;

the clamping device comprises an arm cover and a connecting arm support, wherein a roller silicone ring is mounted at each of the opposite surfaces of the arm cover; a roller shaft is arranged at each end of the roller silicone ring; the roller shaft is rotatably mounted in the roller shaft orifice of the arm cover; the connecting arm support is connected with the transmission shaft of the gear transmission assembly; and a hinged structure is arranged between the connecting arm support and the arm cover.

As a preferred technical solution, the hinged structure comprises a plug inserted between the connecting arm support and the arm cover, and a torsion spring is provided at the outer portion of each of the plugs. When the mobile phone is placed into the clamping cavity, the torsion spring follows the hinged structure to open; after the mobile is placed into the clamping cavity, the torsion spring drives the hinged structure to reset to fasten the mobile phone.

As a preferred technical solution, the gear transmission assembly comprises an intermediate gear, a gear shift lever and two transmission arms; two shaft fixing slots are arranged at each of the two sides of the upper surface of the two transmission arms, and two transmission arms are spliced into a square structure; a gear transmission cavity is provided at the middle of the transmission arm, and a gear slot is arranged at each of the opposite surfaces of the transmission arm; the intermediate gear is mounted at the gear transmission cavity and is in contact with the gear slot; the gear shift lever is fixedly connected with the intermediate gear; the gear shift lever passes through the shell and protrudes to the outside, and the extended end thereof is connected with a toggle button.

As a preferred technical solution, an arcuate toggle slot is arranged at the shell and the toggle button is mounted in the arcuate toggle slot.

As a preferred technical solution, the shell comprises a front shell and a rear shell; the front shell and the rear shell are assembled with each other; two transmission arms are fixedly mounted at the bottom surface of the front shell, and a support is arranged at the bottom of the rear shell.

As a preferred technical solution, the wireless charging assembly comprises a charging mainboard and a wireless transmitting coil; the charging mainboard is mounted at the support of the rear shell; the wireless transmitting coil is connected with the charging mainboard and is mounted outside the front shell, and a light button is arranged at one side of the charging mainboard.

The invention has the advantageous effects that two rollers are arranged at the position where the mobile phone is placed, and the mobile phone can be clamped by pressing hard the rollers, to adjust different sizes of mobile phones and different strength, which solves the problem of the control of clamping force on the mobile phone and clamping strength, wireless charging and reduction of occupying space.

### BRIEF DESCRIPTION OF THE DRAWINGS

In order to more clearly illustrate the technical solutions in the embodiments of the invention or the prior art, the drawings used in the embodiments or the prior art description will be briefly described below. It is obvious that the drawings in the description below are merely some embodiments of the invention and those of ordinary skill in the art may obtain other drawings with reference to these drawings without creative efforts.
FIG. 1 is the exploded structural diagram of the invention;
FIG. 2 is the structural diagram illustrating the transmission arm of the invention;
FIG. 3 is the inner assembled diagram of the invention;
FIG. 4 is the stereoscopic structural diagram of the invention;
FIG. 5 is the schematic diagram illustrating the build-in hidden spring in the shift lever of the invention;
FIG. 6 is the using state diagram 1 of the invention;
FIG. 7 is the using state diagram 2 of the invention.

### DETAILED DESCRIPTION OF THE PREFERRED EMBODIMENTS

All of the features or steps in all methods or processes disclosed in the specification may be combined in any manner, other than mutually exclusive features and/or steps.

Any feature disclosed in the specification (including any appended claims, abstract and drawings) may be replaced by other equivalent or similar alternative features, unless otherwise stated. That is, unless specifically stated, each feature is merely one example of a series of equivalent or similar features.

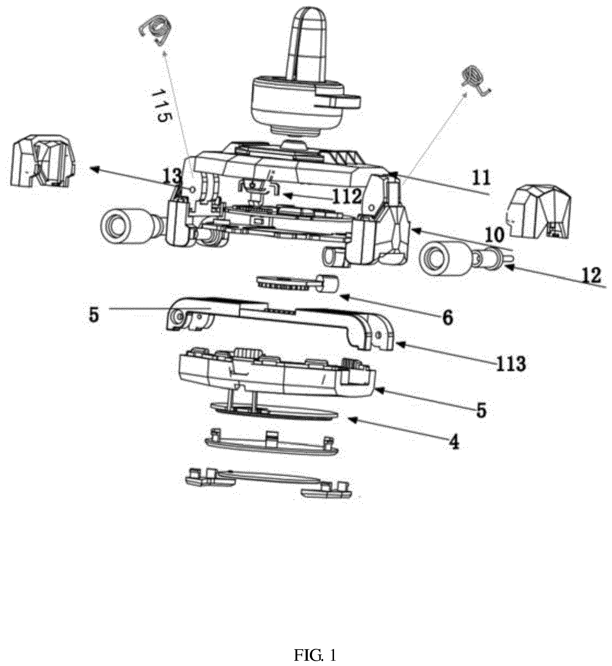

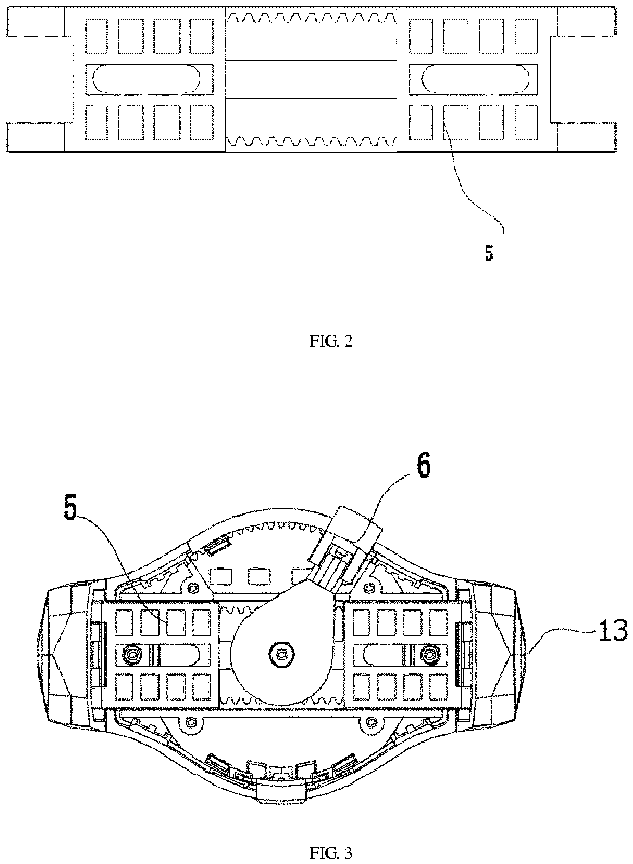

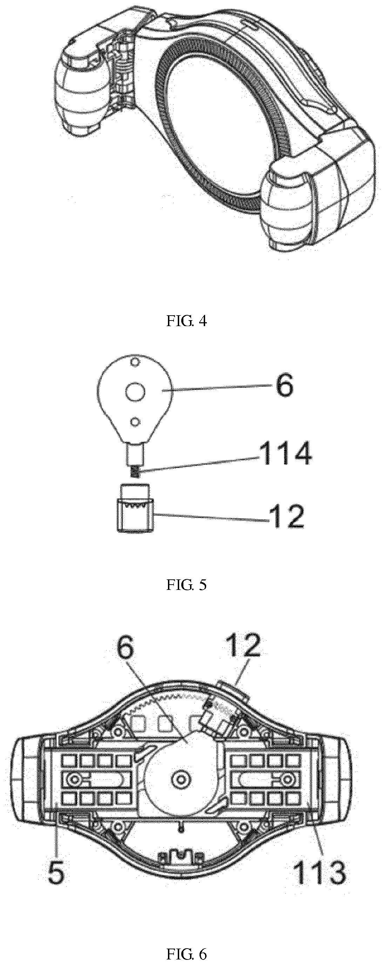

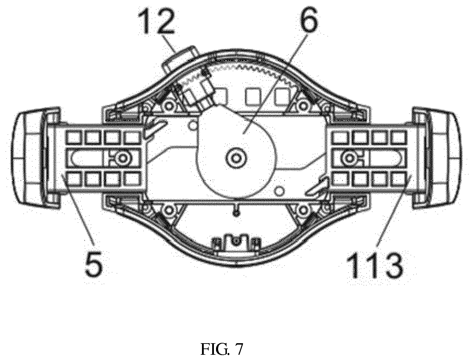

As shown in FIG. 1-7, the novel vehicle-mounted roller automatic mobile phone clamping support comprises a shell, wherein a fixing clamp assembly is arranged at the bottom thereof; a wireless charging assembly and a gear transmission assembly are arranged at the middle thereof; a clamping device is arranged at both ends thereof respectively, and a clamping cavity for clamping the mobile phone is formed between two clamping devices; the clamping cavity drives the connecting arm support and the connecting portion of the gear through circumscribing the shift lever and pressing the shift lever switch to realize the size adjustment of the clamping cavity; a hidden spring 114 is arranged inside the shift lever, when the shift lever switch 12 is pressed, the gear on the shift lever is disengaged to move left and right to drive the gear connecting arm support to stretch; when the pressed shift lever is released, the hidden spring 115 is open outward to be up against the shift lever to make the gear on the shift lever and the gear on the shell butted and to limit the connecting arm support to stretch;

the clamping device comprises an arm cover 13 and a connecting arm support 10, wherein a roller silicone ring 12 is mounted at each of the opposite surfaces of the arm cover 13; a roller shaft is arranged at each end of the roller silicone ring; the roller shaft is rotatably mounted in the roller shaft orifice of the arm cover; the connecting arm support 10 is connected with the transmission shaft of the gear transmission assembly; and a hinged structure is arranged between the connecting arm support and the arm cover; the wireless charging assembly can be used for wireless charging, which is simple and convenient.

The hinged structure comprises a plug inserted between the connecting arm support 10 and the arm cover 13; two connecting portions 113 are arranged at each of the two sides of the transmission arm 5; the connecting portion 113 is inserted into the rotating slot of one end of the connecting arm support 10; the plug passes through the connecting portion 113 and the plug orifice on the connecting arm support 10; a torsion spring 115 is provided at the outer portion of each of the plugs, as shown in FIG. 1; the hinged structure is arranged so that the opening of the clamping device at both ends can be adjusted into a larger opening; two clamping devices are broken outward by the hinged structure, so the mobile phone of larger size can be placed; the torsion spring is used for the homing clamping process after placing, and the removal method is the same: just taking out the mobile phone in the reverse direction, which is very convenient.

The gear transmission assembly comprises an intermediate gear, a gear shift lever and two transmission arms; two shaft fixing slots are arranged at each of the two sides of the upper surface of the two transmission arms, and two transmission arms are spliced into a square structure; a gear transmission cavity is provided at the middle of the transmission arm, and a gear slot is arranged at each of the opposite surfaces of the transmission arm; the intermediate gear is mounted at the gear transmission cavity and is in contact with the gear slot; the gear shift lever is fixedly connected with the intermediate gear; the gear shift lever passes through the shell and protrudes to the outside, and the extended end thereof is connected with a toggle button.

Wherein an arcuate toggle slot is arranged at the shell and the toggle button 6 is mounted in the arcuate toggle slot.

The shell comprises a front shell 4 and a rear shell 11; the front shell 4 and the rear shell 11 are assembled with each other; two transmission arms 5 are fixedly mounted at the bottom surface of the front shell, and a support is arranged at the bottom of the rear shell 11.

The wireless charging assembly comprises a charging mainboard and a wireless transmitting coil; the charging mainboard is mounted at the support of the rear shell; the wireless transmitting coil is connected with the charging mainboard and is mounted outside the front shell, and a light button 112 is arranged at one side of the charging mainboard. The wireless charging assembly can be used for wireless charging, which is simple and convenient.

When clamping, as long as the gear shift lever is toggled externally to make the intermediate gear rotate, so that the transmission arm engaging transmitted with the intermediate gear is pushed outward, then the mobile phone can be placed, and can be removed by toggling the toggle button in the reverse direction, which is simple and convenient.

The invention has the advantageous effects that two rollers are arranged at the position where the mobile phone is placed, and the mobile phone can be clamped by pressing hard the rollers, to adjust different sizes of mobile phones and different strength, which solves the problem of the control of clamping force on the mobile phone and clamping strength, wireless charging and reduction of occupying space.

The above is merely the specific embodiment of the invention, but the protection scope of the invention is not limited thereto; any modifications or substitutions without creative efforts shall all fall within the protection scope of the invention. Therefore, the protection scope of the invention is subject to the protection scope defined by the claims.

## Claims

1. A novel vehicle-mounted roller automatic mobile phone clamping support, comprising a shell, wherein a fixing clamp assembly is arranged at the bottom thereof; a wireless charging assembly and a gear transmission assembly are arranged at the middle thereof; a clamping device is arranged at both ends thereof respectively; and a clamping cavity for clamping the mobile phone is formed between two clamping devices; the clamping cavity drives the connecting arm support and the connecting portion of the gear through circumscribing the shift lever and pressing the shift lever switch to realize the size adjustment of the clamping cavity; a hidden spring is arranged inside the shift lever, when the shift lever switch is pressed, the gear on the shift lever is disengaged to move left and right to drive the gear connecting arm support to stretch; when the pressed shift lever is released, the hidden spring is open outward to be up against the shift lever to make the gear on the shift lever and the gear on the shell butted and to limit the connecting arm support to stretch;
the clamping device comprises an arm cover and a connecting arm support, wherein a roller silicone ring is mounted at each of the opposite surfaces of the arm cover; a roller shaft is arranged at each end of the roller silicone ring; the roller shaft is rotatably mounted in the roller shaft orifice of the arm cover; the connecting arm support is connected with the transmission shaft of the gear transmission assembly; and a hinged structure is arranged between the connecting arm support and the arm cover.

2. The novel vehicle-mounted roller automatic mobile phone clamping support according to claim 1, wherein the hinged structure comprises a plug inserted between the connecting arm support and the arm cover, and a torsion spring is provided at the outer portion of each of the plugs.

3. The novel vehicle-mounted roller automatic mobile phone clamping support according to claim 1, wherein the gear transmission assembly comprises an intermediate gear, a gear shift lever and two transmission arms; two shaft fixing slots are arranged at each of the two sides of the upper surface of the two transmission arms, and two transmission arms are spliced into a square structure; a gear transmission cavity is provided at the middle of the transmission arm, and a gear slot is arranged at each of the opposite surfaces of the transmission arm; the intermediate gear is mounted at the gear transmission cavity and is in contact with the gear slot; the gear shift lever is fixedly connected with the intermediate gear; the gear shift lever passes through the shell and protrudes to the outside, and the extended end thereof is connected with a toggle button.

4. The novel vehicle-mounted roller automatic mobile phone clamping support according to claim 1, wherein an arcuate toggle slot is arranged at the shell and the toggle button is mounted in the arcuate toggle slot.

5. The novel vehicle-mounted roller automatic mobile phone clamping support according to claim 1, wherein the shell comprises a front shell and a rear shell; the front shell and the rear shell are assembled with each other; two transmission arms are fixedly mounted at the bottom surface of the front shell, and a support is arranged at the bottom of the rear shell.

6. The novel vehicle-mounted roller automatic mobile phone clamping support according to claim 1, wherein the wireless charging assembly comprises a charging mainboard and a wireless transmitting coil; the charging mainboard is mounted at the support of the rear shell; the wireless transmitting coil is connected with the charging mainboard and is mounted outside the front shell, and a light button is arranged at one side of the charging mainboard.
